Europäisches Patentamt

European Patent Office

Office européen des brevets

(19)

(11) Publication number: **0 009 654**
**B1**

(12) **EUROPEAN PATENT SPECIFICATION**

(45) Date of publication of patent specification: **23.02.83**

(51) Int. Cl.³: **E 04 B 1/98, F 16 F 7/12**

(21) Application number: **79103319.4**

(22) Date of filing: **06.09.79**

(54) **Blast-resistant barrier.**

(30) Priority: **27.09.78 US 946321**

(43) Date of publication of application:
**16.04.80 Bulletin 80/8**

(45) Publication of the grant of the patent:
**23.02.83 Bulletin 83/8**

(84) Designated Contracting States:
**DE FR GB NL**

(56) References cited:
**CH - A - 585 356**
**DE - A - 2 613 655**
**DE - U - 1 949 782**
**DE - U - 7 229 746**
**DE - U - 7 443 420**
**GB - A - 1 433 167**
**US - A - 2 870 871**
**US - A - 3 412 628**
**US - A - 3 500 773**
**US - A - 3 908 951**

(73) Proprietor: **H.H. Robertson Company**
**Two Gateway Center**
**Pittsburgh Pennsylvania 15222 (US)**

(72) Inventor: **Ming Long Ting, Raymond**
**318 Holiday Drive**
**Pittsburgh, Pennsylvania 15237 (US)**

(74) Representative: **Patentanwälte Dipl.-Ing. A.**
**Grünecker, Dr.-Ing. H. Kinkeldey, Dr.-Ing. W.**
**Stockmair, e⸱ al,**
**Dr. rer. nat. K. Schumann, Dipl.-Ing. P.H. Jakob,**
**Dr. rer. nat. G. Bezold Maximilianstrasse 43**
**D-8000 München 22 (DE)**

Blast-resistant barrier

This invention relates to a blast-resistant barrier comprising spaced-apart generally parallel frame members and a panel structure spanning the distance between said frame member and being adapted to undergo plastic deformation on application of high dynamic impact loads as well as energy absorbing support means interposed between each of said frame members and said panel structure for supporting said panel structures spaced from said frame members.

The basic concept of such a blast-resistant barrier is already known from US Patent 3,500,773 which discloses a protective arrangement for the protection of an exposed side of a building or similar structure against impacting by objects moving at high velocity. A coverplate of penetration-resisting material is mounted on the exposed side spaced therefrom and with freedom of movement relative thereto. Resilient spring means is interposed between the exposed side and the coverplate and is operative for resiliently resisting the movement of the coverplate towards the exposed side to thereby assist in absorbing the kinetic energy of objects impacting the coverplate.

The protection of structures from damage resulting from dynamic impact loads has become increasingly important because of the high cost of repairing the resulting damage.

It is known that extremely high initial peak loads are required to initiate buckling of protective wall structures. Once buckling has initiated, the load (plastic load) required to continue crushing of said protective wall structures is significantly less than the peak load. It is also well known that the structure supporting an energy absorbing device also must be capable of sustaining the high peak load. Consequently, economies in the construction of the supporting structure can be achieved by providing an energy absorbing device wherein the peak load is approximately equal to the plastic load, i.e. wherein the peak load-to plastic load ratio approaches unity.

In view of the above, the protective arrangement according to US Patent 3,500,773 requires a substantial improvement in particular, concerning the peak load-to-plastic load ratio and the energy absorbing support means since the prior art resilient spring means have been proven to show unsatisfactory energy absorbing performance.

From US Patent 3,908,951 there is already known a shock attenuating supporting structure for a device mounted on said support structure. Said support structure comprises a unitary member having a rectangular cross-section and reinforcing means for preventing the top member of said support from deforming during shock loads which would be damaging to said device. The known support structure is substantially rigid for shock loads below a predetermined magnitude and suffers plastic deformation for shock loads above said predetermined magnitude. According to a preferred embodiment, said prior art shock attenuating support comprises a faceplate, a base and a row of spaced-apart permanently deformable sidewalls aligned in generally parallel relation relative to each other and extending transversely of the faceplate. The sidewalls have opposite edges connected to the faceplate and to the base. Each of the sidewalls is bent along at least one bend line which is spaced from and extends generally parallel with the faceplate and the base.

An impact absorber in particular, for a vehicle is disclosed in GB Patent 1,433,167. The impact absorbers shown comprise a series of angularly oriented panels which have at least two parallel sides or edges.

The object of the present invention is to provide a blast-resistant barrier, such as a wall or roof structure, which exhibits significantly improved energy absorbing properties and in particular, exhibit peak load-to-plastic load ratios of from 3—1.

In accordance with the present invention, an improvement of the blast resistant barrier mentioned above in respect of US Patent 3,500,773 is obtained by each of the support means including at least two spaced-apart permanently deformable sidewalls extending between the panel structure and the adjacent frame member, each of said sidewalls being bent along at least one bend line disposed between opposite edges thereof and extending parallel with the adjacent frame members; whereby upon the occurrence of dynamic impact loads upon said barrier said support means will collapse toward said frame members at a first peak resistance, and said panel structure will undergo plastic deformation at a second peak resistance which is greater than said first peak resistance to absorb the impact energy transmitted.

The support means to be used within the inventive blast-resistant barrier exhibits useful energy absorbing capacities when formed from sheet metal having a thickness of from 0.121 to 0.342 centimetres. When the sidewalls of said energy absorbing support means have a thickness of about 0.635 centimetres, a useful energy absorbing capacity of approximately 217,440 kg (480 kips) can be reached. Sidewall thicknesses in excess of 0.635 centimetre will provide capacities greater than 217,440 kg. Preferred embodiments and further improvements of the subject matter of the present invention are defined within the sub-claims.

The advantages offered by the invention are mainly that the reduced dynamic reactions in the inventive structures provide economies in the material and construction of the building framework and the foundation and also permit the span of the panel structure of a given strength to be significantly increased, or conversely permit the strength requirements of a panel of given span to be significantly reduced.

The invention is described in detail below with reference to drawings which illustrate the inventive blast-resistant barrier and the main constituents thereof, in which:

Fig. 1 is a fragmentary isometric view illustrating the energy absorbing support means of the barrier structure,

Fig. 2 is an end view schematically illustrating the device of Fig. 1,

Figs. 3 and 4 are end views illustrating the loading and collapse of the device of Fig. 1,

Fig. 5 is a graphical presentation of the general relationship between the strength of the energy absorbing device of Fig. 1 and the thickness of the steel from which the device is fabricated,

Figs. 6—8 are end views schematically illustrating alternative configurations of the energy absorbing support means,

Fig. 9 is a cross-sectional view, taken along line 9—9 of Fig. 10, illustrating a blast-resistant barrier incorporating the energy absorbing support means of Fig. 1,

Fig. 10 is a cross-sectional view taken along line 10—10 of Fig. 9,

Figs. 11—14 are side views schematically illustrating the manner in which the present blast-resistant barrier absorbs the transmitted blast load energy,

Fig. 15 is a plan view of a second preferred embodiment of the energy absorbing support means,

Fig. 16 is a fragmentary cross-sectional isometric view as viewed from line 16—16 of Fig. 15 and

Figs. 17—21 are end views illustrating alternative arrangements of the device of Fig. 16.

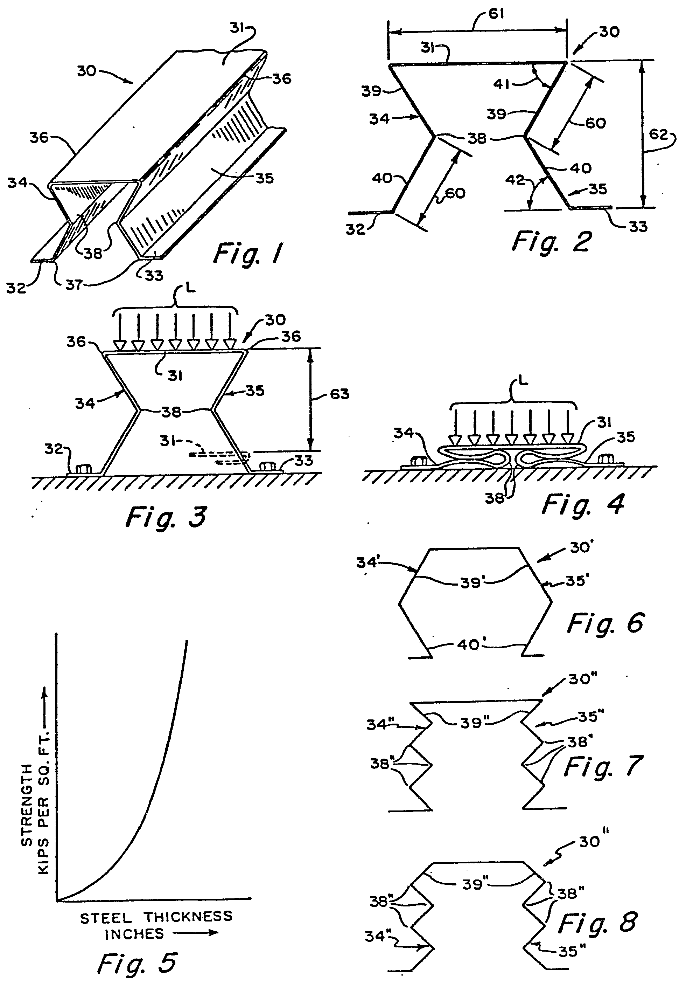

Figure 1 illustrates one preferred form of an energy absorbing support means or device 30 which is fabricated from sheet metal by, for example, brake forming operations. The device 30 comprises, in general, a faceplate 31, a base in the form of mounting flanges 32, 33 which are coplanar and preferably generally parallel to the faceplate 31, and sidewalls 34, 35 which adjoin opposite edges 36 of the faceplate 31 and connect the faceplate 31 to adjacent inner edges 37 of the mounting flanges 32, 33.

Each of the sidewalls 34, 35 is partially bent along at least one bend line 38 which is spaced from and extends generally parallel with the faceplate 31 and with the plane of the mounting flanges 32, 33. The arrangement is such that, as illustrated in Figures 3 and 4, upon the occurrence of substantial impact schematically illustrated by the arrows L upon the faceplate 31, the sidewalls 34, 35 will permanently deform about the bend lines 38 to absorb the impact energy transmitted.

The sidewalls 34, 35 (Figure 2) include first segments 39 which are oppositely inclined from the faceplate 31 toward the bend lines 38, and second segments 40 each of which is inclined from the bend line 38 toward the mounting flanges 32, 33 and in a direction opposite to that of the adjoining first segment 39. In the preferred arrangement, the first segments 39 are converging segments and the second segments 40 are diverging segments. In addition, each of the segments 39, 40 has a width 60 which is at most equal to or less than one-half the width 61 of the faceplate 31. The bend lines 38 preferably reside midway between the faceplate 31 and the plane of the mounting flanges 32, 33. The arrangement is such that as the device 30 collapses as illustrated in Figures 3 and 4 the sidewalls 34, 35 will permanently deform about the bend lines 38 without contacting each other as at the bend lines 38. Such contact is highly undesirable since it introduces unpredictable stresses which would affect the predictability of the load at which the device 30 fails.

The device 30 has an overall height indicated at 62 in Figure 2. The distance through which the faceplate 31 moves under load toward the flanges 32, 33 is herein termed the deformable distance and is identified in Figure 3 by the dimension line 63. Because of the folding (Figure 4) of the sidewalls 34, 35, the available deformable distance 63 is always less than the overall height 62 — compare Figures 2 and 3.

It will also be observed in Figure 2 that each of the sidewalls 38 is inclined at an acute angle 41 relative to the plane of the faceplate 31; and that each of the second segments 40 is inclined at a second acute angle 42 relative to the plane of the mounting flanges 32, 33. Load tests have been conducted on various specimens of the present energy absorbing device 30 to determine the effect of the nominal thickness of the sheet metal and of the value of the acute angles 41, 42 on the peak load-to-plastic load ratio. As a result of those tests it has been determined (1) that for acute angles 41, 42 of 90 angular degrees, the peak load-to-plastic load ratio varies from 4.33 to 5.83; (2) that for acute angles 41, 42 of 75 angular degrees, the peak load-to-plastic load ratio varies from 1.9 to 3.06; and (3) that for acute angles 41, 42 of 60 angular degrees, the peak load-to-plastic load ratio varies from 1.0 to 1.2. The test results indicate that the acute angles 41, 42 may have a value of from 20 to 75 angular degrees, and preferably from 20 to 60 angular degrees. The device 30 may be formed from sheet metal having a nominal thickness of from 0.121 to 0.342 centimeter.

A general relationship between the strength of the device 30 and the nominal thickness of the sheet metal from which the device 30 is fabricated has been developed. That general relationship, graphically presented in Figure 5, indicates that the strength of the device 30 increases curvilinearly within increasing steel thickness.

Alternative embodiments of the present energy absorbing device are schematically illustrated in Figures 6 through 8.

Figure 6 illustrates a device 30' wherein the sidewalls 34', 35' include diverging first segments 39' and converging second segments 40'.

Figures 7 and 8 illustrate a device 30" wherein the sidewalls 34", 35" have a sawtooth profile, each of which presents plural bend lines 38". In the device 30" of Figure 7, the sidewalls 34", 35" include converging first segments 39". In the device 30" of Figure 8, the sidewalls 34", 35" include diverging first segments 39".

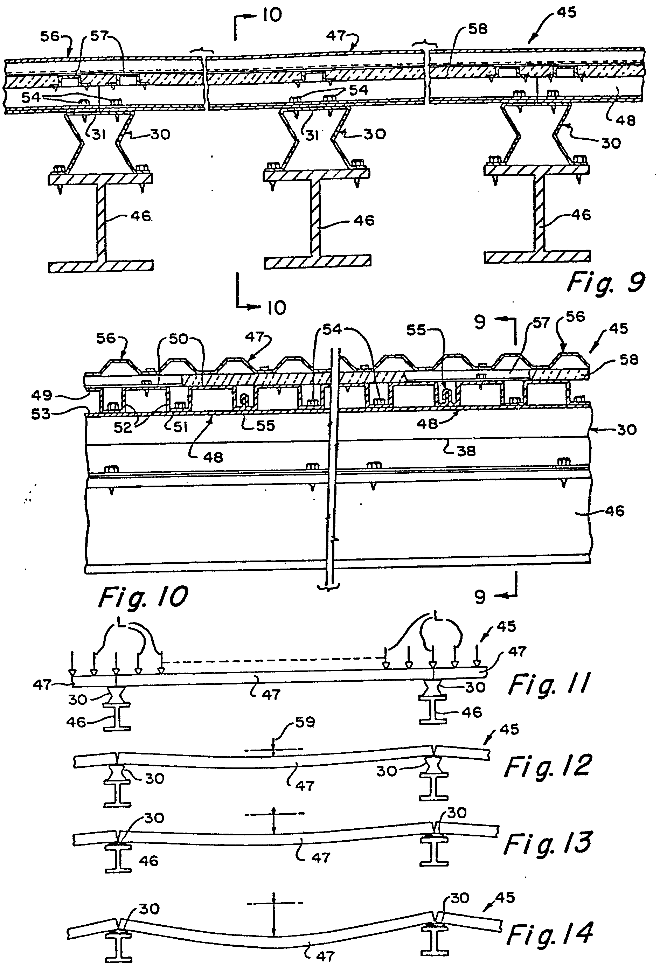

Figures 9 and 10 illustrate a blast-resistant barrier 45 useful as a wall or roof structure. The barrier 45 comprises spaced-apart generally parallel frame members 46 which constitute members of the structural framework of a building. A panel structure 47 is provided which spans the distance between the frame members 46 and which is adapted to undergo permanent deformation on application of a blast load. Support means — energy absorbing devices 30 — are provided, one interposed between each of the frame members 46 and the panel structure 47. The support means 30 support the panel structure 47 spaced from the frame members 46 and preferably extend continuously along the length of the frame members 46 between the opposite longitudinal sides of the panel structure 47.

As best shown in Figure 10, the panel structure 47 essentially comprises a plurality of cellular elements 48 erected in side-by-side interlocked relation. Each of the cellular elements 48 comprises a corrugated outer sheet 49 presenting alternating crests 50 and valleys 51 connected by inclined webs 52; and a correlative lower metal sheet 53 secured to contiguous portions (the valleys 51) of the outer sheet 49. The cellular elements 48 extend transversely of the energy absorbing devices 30 and are secured to the faceplates 31 by one or more fasteners 54. Adjacent ones of the cellular elements 44 may be connected by any suitable means, such as by a male and female joint 55.

If desired, the barrier 45 may also include a decorative outer cover, such as profiled facing sheets 56. The facing sheets 56 are secured to and supported on subgirts 57. The subgirts 57 extend transversely of the cellular elements 48 and are secured to the cellular elements 48 at spaced locations therealong. Theremal insulation 58 may be provided in the space between the cellular elements 48 and the facing sheets 47.

It is to be understood that the blast-resistant capacity of the barrier 45 is provided substantially entirely by the cooperative contribution of the cellular elements 48 and the energy absorbing devices 30. The facing sheet 56, the subgirts 57 and the thermal insulation 58 do not add significantly to the blast-resistant capacity and are provided solely for the purpose of improving the aesthetic appearance of the barrier exterior face to improve the thermal efficiency of the barrier 45.

The present blast-resistant barrier 45 may be erected on a single span condition such as schematically illustrated in Figures 11 or 14; or on multiple span conditions, such as the double span illustrated in Figure 9.

The manner in which the present blast-resistant barrier 45 absorbs dynamic impact energy transmitted thereto will now be described with reference to Figures 11 through 14. In Figure 11, the panel structures 47 are erected on a simple or single span condition. Upon the occurrence of a blast adjacent to the barrier 45, a substantially uniform dynamic impact load represented by the group of arrows L is applied to the exterior face of the panel structures 47. The initial effect of the dynamic impact load L is the deflection of the panel structures 47 through an incremental distance indicated at 59 in Figure 12. As the dynamic impact load increases the resistance to deflection of the panel structure 47 and of the energy absorbing devices 30 likewise increases. At a first peak resistance, the support means or energy absorbing devices 30 will collapse toward the frame members 46, compare Figures 12 and 13. During collapse of the energy absorbing devices 30, the sidewalls 34, 35 thereof (Figures 3 and 4) will permanently deform about the bend lines to absorb a significant portion of the impact energy transmitted. The strength of the devices 30 normally is such that 50% of the impact energy transmitted is absorbed during collapse of the devices 30. Following collapse of the devices 30, the panel structure will undergo permanent deformation (Figure 14) at a second peak resistance which is greater than the first peak resistance. The permanent deformation of the panel structures 47 will absorb the residual impact energy transmitted.

It should now be apparent that in the absence of the support means 30, the blast moment must be resisted mainly by the cellular elements (48) and in part by the frame members (46). However, in accordance with this invention, the introduction of the support means (30) provides a barrier which exhibits reduced dynamic reactions. Thus the present invention provides economies in the material and construction of the building framework and the foundation; and permits the span of the panel structure of a given strength to be significantly increased, or conversely permits the strength requirements of a panel structure of given span to be significantly reduced.

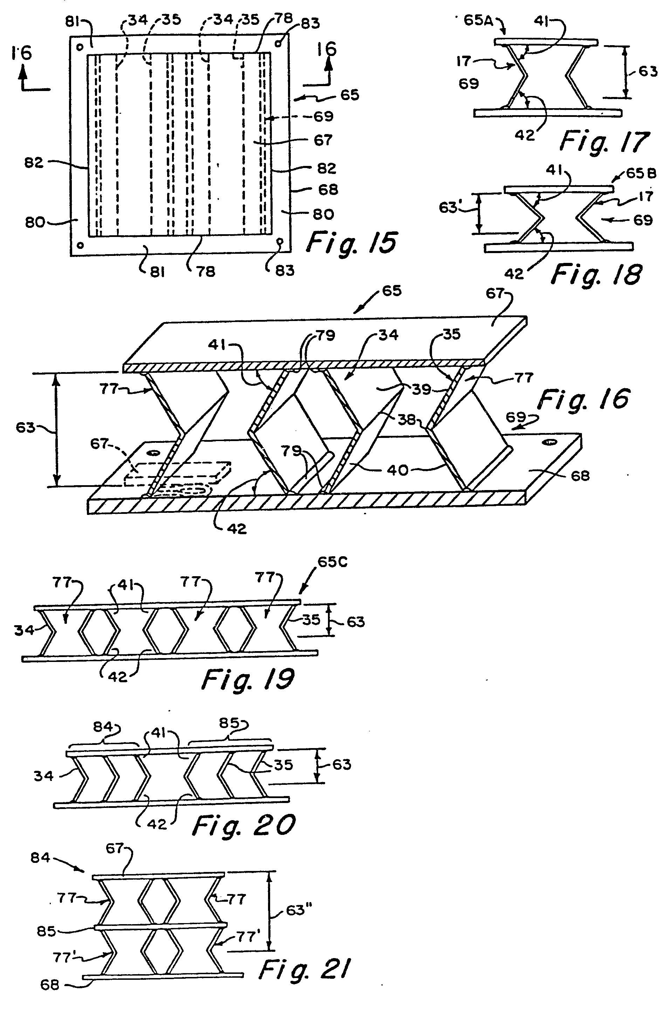

Various embodiments of the energy absorbing device, identified by reference numeral (65) are illustrated in Figs. 15—21.

It will be observed in Fig. 16 that a core (69) comprises at least one (two in this embodiment) set (77) of sidewalls (34, 35). The sidewalls (34, 35) of each set (77) present converging first segments (39) and diverging second segments (40). The segments (39, 40) of each sidewall (34, 35) are joined at the bend line (38). In the preferred arrangement, the bend lines (38) reside substantially midway between the plates (67, 68). To maximize the load absorbing capacity, the sidewalls (34, 35) may and preferably extend continuously between the opposite ends (78) (Fig. 15) of the faceplate (67). Each of the sidewalls (34, 35) has its opposite ends secured to the plates (67, 68) by any suitable means, such as fillet welds (79) (Fig. 16).

To facilitate securement of the structure (65) to the support (column 66), the base plate (68) presents opposite side portions (80) and opposite end portions (81) which extend outwardly beyond the corresponding opposite sides (82) and opposite ends (78) of the faceplate (67). Apertures (83) are provided, for example, at the corners of the base plate (68), which receive fasteners for securing the structure (65) to the support in the manner illustrated in Fig. 22.

Two properties of the present energy absorbing structure are of significant importance. These are the energy absorbing capacity and the deformable distance of the structure.

The energy absorbing capacity is a function of the number of sets (77) of sidewalls which constitute the core (69). The structure (65) (Fig. 16) for example, has two sets (77) of sidewalls and has an energy absorbing capacity of predetermined value. Structures (65A, 65B) (Figs. 17 and 18) may be provided which have a single set (77) of sidewalls. The structure (65A, 65B) will exhibit an energy absorbing capacity which is substantially equal to one-half that of the structure (65) (Fig. 16). A structure (65C) (Fig. 19) has a core consisting of four sets (77) of sidewalls and will exhibit an energy absorbing capacity substantially equal to twice that of the structure (65) (Fig. 16). A structure (65D) (Fig. 20) has a core consisting of one set (84) of three of the sidewalls (34) and one set (85) of three of the sidewalls (35). The structure (65D) will exhibit a load absorbing capacity approximately three-fourths that of the structure (65C).

In Fig. 16, the location of the faceplate (67) following collapse of the sidewalls (34, 35) is illustrated in dotted outline. It will be observed that the faceplate (67) moves through the deformable distance (63) of the structure (65). The structures (65) of Figs. 16, 17, 19 and 20) have identical deformable distances (63) but different energy absorbing capacities. The total energy absorbing capacity of the structure may be varied without varying the deformation distance (D).

The deformation distance (63) may be varied by changing the acute angles (41, 42) or by stacking two or more of the structures. In Fig.

18, the core (69) presents acute angles (41, 42) which are shallower than those of the core (69) of Fig. 17. Consequently the structure (65B) has a deformation distance (63') which is less than the deformation distance (63) of the structure (65A).

Fig. 21 illustrates a structure (84) comprising a faceplate (67), a base plate (68), and an intermediate plate (85). Two sets (77) of the sidewalls are provided between the faceplate (67) and the intermediate plate (85). Two additional sets (77') are provided between the base plate (68) and the intermediate plate (85). The structure (84) exhibits an energy absorbing capacity substantially equal to that of the structure (65) of Fig. 16 but which has a deformable distance (63") substantially equal to twice the deformable distance (63) of the structure (65) (Fig. 16).

The above described structures provide an energy absorbing device wherein the load absorbing capacity may be varied without increasing the deformable distance; or conversely wherein the deformable distance may be varied without changing the load absorbing capacity of the device. In addition, the energy absorbing capacity of the device may also be changed by varying the thickness of the sidewalls (34, 35). It has been determined that a pad similar to that illustrated in Figs. 15 and 16 wherein the faceplate (67) has a width and length equal to 0.61 metre, wherein the sidewalls have an overall length of 0.61 metre and a thickness of 0.64 centimetres will exhibit an energy absorbing capacity of approximately 217,440 kg.

**Claims**

1. A blast-resistant barrier comprising spaced-apart generally parallel frame members (46) and a panel structure (47) spanning the distance between said frame members and being adapted to undergo plastic deformation on application of high dynamic impact loads as well as energy absorbing support means (30) interposed between each of said frame members and said panel structure, supporting said panel structure spaced from said frame members, characterized by each of said support means (30) including at least two spaced-apart permanently deformable sidewalls (34, 35) extending between said panel structure and the adjacent frame member, each of said sidewalls being bent along at least one bend line (38) disposed between opposite edges thereof and extending parallel with the adjacent frame members, whereby upon the occurrence of dynamic impact loads upon said barrier said support means will collapse toward said frame members at a first peak resistance, and said panel structure will undergo plastic deformation at a second peak resistance which is greater than said first peak resistance to absorb the impact energy transmitted.

2. The blast-resistant barrier of Claim 1 characterized in that each of said support means (30) extends continuously along the adjacent frame member (46) and between opposite longitudinal sides of said panel structure (47).

3. The blast-resistant barrier of Claim 1 characterized in that each of said support means is formed from sheet metal having a nominal thickness of from 0.121 to 0.342 centimetres.

4. The blast-resistant barrier of Claim 1 characterized in that each of said sidewalls (34, 35) has a sawtooth profile and presents plural bend lines (38, 38").

5. The blast-resistant barrier of Claim 1 characterized in that each of said support means (30) comprises:

a faceplate (31) secured to said panel structure (42);

mounting flanges (32, 33) secured to the adjacent frame members (46); and

said sidewalls (34, 35) connecting opposite outer edges of said faceplate to adjacent inner edges of said mounting flanges.

6. The blast-resistant barrier of Claim 5 characterized in that bend lines (38, 38") reside substantially midway between said faceplate (31) and said mounting flanges (32, 33).

7. The blast-resistant barrier of Claim 5 characterized in that said sidewalls (34, 35) include:

first segments (39) which are oppositely inclined from said faceplate toward the bend lines (38, 38"); and

second segments (40) each of which is inclined from the bend lines in a direction opposite to that of the adjoining first segment.

8. The blast-resistant barrier of Claim 5 characterized in that the width of each first segment (39) is at most equal to one-half the width of said faceplate (31).

9. The blast-resistant barrier of Claim 7 characterized in that said first segments (39) are converging segments.

10. The blast-resistant barrier of Claim 7 characterized in that said first segments (39) are diverging segments.

11. The blast-resistant barrier of Claim 7 characterized in that the acute angle between each of said first segments (39) and said faceplate (31) is greater than 20 angular degrees and less than 75 angular degrees.

12. The blast-resistant barrier of Claim 7 or 11 characterized in that the acute angle between each of said second segments (40) and the face of the adjacent frame member (46) is greater than 20 angular degrees and less than 75 angular degrees.

**Patentansprüche**

1. Druckwellenbeständige Schutzeinrichtung mit im Abstand voneinander angeordneten, im wesentlichen parallelen Rahmenteilen (46) und einer die Abstände zwischen den Rahmenteilen überspannenden Paneel-Struktur (47), welche unter der Einwirkung hoher dynamischer Druckbeanspruchungen plastisch verformbar ist, und mit energieverzehrenden Halterungseinrichtungen (30), welche zwischen jedem der Rahmenteile und der Paneelstruktur eingefügt sind, wobei diese Halterungseinrichtungen die Paneel-Struktur im Abstand von den Rahmenteilen halten, dadurch gekennzeichnet, daß jede der Halterungseinrichtungen (30) wenigstens zwei voneinander beabstandete, bleibend verformbare Seitenwände (34, 35) aufweist, welche sich zwischen der Paneel-Struktur und dem angrenzenden Rahmenteil erstrecken, wobei jede der Seitenwände längs wenigstens einer Biegelinie (38) gebogen sind, die zwischen den einander gegenüberliegenden Kanten der Seitenwandungen angeordnet sind und sich parallel zu den angrenzenden Rahmenteilen erstrecken, so daß beim Beaufschlagen der Schutzeinrichtung mit dynamischen schlagartigen Beanspruchungen diese Halterungseinrichtungen in Richtung auf die Rahmenteile bei einem ersten Widerstandspeak zusammenbrechen, und die Paneel-Struktur bei einem zweiten Widerstandspeak, eine plastische Verformung erfährt, um die übertragene Schlagenergie zu absorbieren.

2. Druckwellenbeständige Schutzeinrichtung nach Anspruch 1, dadurch gekennzeichnet, daß sich jede der Halterungseinrichtungen (30) kontinuierlich längs des angrenzenden Rahmenteiles (46) sowie zwischen gegenüberliegenden Längsseiten der Paneel-Struktur (47) erstreckt.

3. Druckwellenbeständige Schutzeinrichtung nach Anspruch 1, dadurch gekennzeichnet, daß jede der Halterungseinrichtungen aus einem Metallblech mit einer Nenndicke von 0,121 bis 0,342 cm besteht.

4. Druckwellenbeständige Schutzeinrichtung nach Anspruch 1, dadurch gekennzeichnet, daß jede der Seitenwände (34, 35) ein sägezahnförmiges Profil und eine Vielzahl von Biegelinien (38, 38") aufweist.

5. Druckwellenbeständige Schutzeinrichtung nach Anspruch 1, dadurch gekennzeichnet, daß jede der Halterungseinrichtungen (30) umfaßt:

eine an der Paneel-Struktur (42) befestigte Vorderplatte (31);

an den benachbarten Rahmenteilen (46) befestigte Montageflansche (32, 33) und

die Seitenwände (34, 35), welche einander gegenüberliegende Außenkanten der Vorderplatte mit angrenzenden inneren Kanten der Montageflansche verbinden.

6. Druckwellenbeständige Schutzeinrichtung nach Anspruch 5, dadurch gekennzeichnet, daß die Biegelinien (38, 38") im wesentlichen in der Mitte zwischen der Vorderplatte (31) und den Montageflanschen (32, 33) angeordnet sind.

7. Druckwellenbeständige Schutzeinrichtung nach Anspruch 5, dadurch gekennzeichnet, daß die Seitenwände (34, 35) umfassen:

erste Segmente (39), welche entgegengesetzt verlaufend von der Vorderplatte in Richtung auf die Biegelinien (38, 38″) geneigt sind und

zweite Segmente (40), die jeweils von der Biegelinie in eine Richtung geneigt sind, welche der Richtung der angrenzenden erste Segmente entgegengesetzt ist.

8. Druckwellenbeständige Schutzeinrichtung nach Anspruch 5, dadurch gekennzeichnet, daß die Breite jedes ersten Segmentes (39) maximal gleich ist der Hälfte der Breite der Vorderplatte (31).

9. Druckwellenbeständige Schutzeinrichtung nach Anspruch 7, dadurch gekennzeichnet, daß die ersten Segmente (39) als konvergierende Segmente ausgebildet sind.

10. Druckwellenbeständige Schutzeinrichtung nach Anspruch 7, dadurch gekennzeichnet, daß die ersten Segmente (39) als divergierende Segmente ausgebildet sind.

11. Druckwellenbeständig Schutzeinrichtung nach Anspruch 7, dadurch gekennzeichnet, daß der zwischen jedem der ersten Segmente (39) und der Borderplatte (31) vorliegende spitze Winkel größer ist als 20° und kleiner ist als 75°.

12. Druckwellenbeständige Schutzeinrichtung nach Anspruch 7 oder 11, dadurch gekennzeichnet, daß der zwischen jedem der zweiten Segmente (40) und der Vorderfläche des angrenzenden Rahmenteiles (46) vorliegende spitze Winkel größer ist als 20° und kleiner ist als 75°.

## Revendications

1. Protection résistant aux explosions comprenant des éléments d'ossature espacés généralement parallèles (46) et une structure en panneau (47) qui comble la distance entre lesdits éléments d'ossature et est apte à subir une déformation plastique lorsque des charges d'impact dynamique élevées lui sont appliquées, ainsi que des moyens supports d'absorption d'énergie (30) interposés entre chacun desdits éléments d'ossature et ladite structure en panneau et supportant ladite structure en panneau à une certaine distance desdits éléments d'ossature caractérisée en ce que chacun desdits moyens supports (30) comprend au moins deux parois latérales (34, 35) espacées l'une de l'autre et déformables de façon permanente, s'étendant entre ladite structure en panneau et l'élément d'ossature adjacent, chacune desdites parois latérales étant pliée le long d'au moins une ligne de pliage (38) prévue entre ses bords opposés et s'étendant parallèlement aux éléments d'ossature adjacents, ce par quoi lors de l'apparition de charges d'impact dynamiques sur ladite protection, lesdits moyens supports s'affaissent en direction des éléments d'ossature pour une première résistance de pointe, et ladite structure en panneau subit une déformation plastique pour une seconde résistance de pointe qui est plus importante que ladite première résistance de pointe en vue d'absorber l'énergie d'impact transmise.

2. Protection résistant aux explosions selon la revendication 1, caractérisée en ce que chacun desdits moyens supports (30) s'étend de façon continue le long de l'élément d'ossature adjacent (46) et entre les côtés longitudinaux opposés de ladite structure en panneau (47).

3. Protection résistant aux explosions selon la revendication 1, caractérisée en ce que chacun desdits moyens supports est réalisé en une tôle métallique dont l'épaisseur nominale est comprise entre 0,121 et 0,342 cm.

4. Protection résistant aux explosions selon la revendication 1, caractérisée en ce que chacune desdites parois latérales (34, 35) a un profil en dents de scie et présente plusieurs lignes de pliage (38, 38″).

5. Protection résistant aux explosions selon la revendication 1, caractérisée en ce que chacun desdits moyens supports (30) comprend une plaque frontale (31) fixée à ladite structure en panneau (42), des ailes de montage (32, 33) fixées aux éléments d'ossature adjacents (46) et lesdites parois latérales (34, 35) reliant les bords externes opposés de ladite plaque fontrale aux bords internes adjacents desdites ailes de montage.

6. Protection résistant aux explosions selon la revendication 5, caractérisée en ce que lesdites lignes de pliage (38, 38″) sont disposées sensiblement à mi-chemin entre ladite plaque frontale (31) et lesdites ailes de montage (32, 33).

7. Protection résistant aux explosions selon la revendication 5, caractérisée en ce que lesdites parois latérales (34, 35) comprennent des premiers segments (39) qui sont inclinés selon des directions opposées à partir de ladite plaque frontale en direction des lignes de pliage (38, 38″) et des seconds segments (40) dont chacun est incliné à partir de la ligne de pliage dans une direction opposée à celle du premier segment adjacent.

8. Protection résistant aux explosions selon la revendication 5, caractérisée en ce que la largeur de chaque premier segment (39) est au maximum égale à la moitié de la largeur de ladite plaque frontale (31).

9. Protection résistant aux explosions selon la revendication 7, caractérisée en ce que lesdits premiers segments (39) sont des segments convergents.

10. Protection résistant aux explosions selon la revendication 7, caractérisée en ce que lesdits premiers segments (39) sont des segments divergents.

11. Protection résistant aux explosions selon la revendication 7, caractérisée en ce que l'angle aigu entre chacun desdits premiers segments (39) et ladite plaque frontale (31) est supérieur à 20° et inférieur à 75°.

12. Protection résistant aux explosions selon la revendication 7 ou 11, caractérisée en ce que l'angle aigu entre chacun desdits seconds segments (40) et la face de l'élément d'ossature adjacent (46) est supérieur à 20° et inférieur à 75°.

0 009 654

Fig. 1

Fig. 2

Fig. 3

Fig. 4

Fig. 5

Fig. 6

Fig. 7

Fig. 8

1

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

3